# EUROPÄISCHE PATENTANMELDUNG

(11) **EP 0 912 029 A2**
(43) Veröffentlichungstag der Anmeldung: **28.04.1999**
(21) Anmeldenummer: 98117851.0
(22) Anmeldetag: 21.09.1998
(51) Int. Cl.: H04M 1/00

(54) **Verfahren zum Individualisieren von Telekommunikationsendgeräten**

(30) Priorität: 24.10.1997 DE 19747008
(71) Anmelder: Deutsche Telekom AG, 53113 Bonn (DE)
(72) Erfinder: Breuckmann, Günter, Dipl.-Ing., 64331 Weiterstadt (DE)

(57) **Zusammenfassung**

Es wird ein Verfahren zum Individualisieren von Telekommunikationsendgeräten, Telekommunikationsterminals und Telekommunikationsgeräten, Multimedia-Endgeräten und von Endgeräten der Unterhaltungselektronik im nachfolgenden angegeben, die eine Benutzeroberfläche oder Bedieneroberfläche zur Verfügung stellen, innerhalb der alle Funktionen des Gerätes dem Benutzer angeboten werden. Es ist eine beschränkte, durch den Benutzer individuell am jeweiligen Endgerät festlegbare dauerhafte Auswahl von Funktionen möglich. Das Verfahren ermöglicht es, aus der Gesamtmenge der Funktionen eine Teilmenge von Funktionen auszuwählen, die ein Benutzer oder eine Benutzergruppe zukünftig nutzen möchte. Der Benutzer markiert individuell die jeweiligen Funktionen mit Tastendruck oder Spracheingabe, die in einem Speicher des Gerätes oder des Gesamtsystems abgelegt werden. Die Markierungen dienen der Software als Entscheidungskriterium dafür, ob die jeweilige Funktion aus der Gesamtmenge später zur Teilmenge eines individualisierten Menüs dem Benutzer angeboten wird. Das Beenden der Programmierprozedur wird gleichzeitig auch als Kriterium für die abschließende Speicherung und das Umschalten in den normalen Betriebsmodus verwendet. Das Verfahren ermöglicht auch die Erstellung und Speicherung mehrerer Benutzerprofile für ein spezifisches Endgerät.

## Beschreibung

Die Erfindung betrifft ein Verfahren zum Individualisieren von Telekommunikationsendgeräten nach dem Oberbegriff des Patentanspruchs 1.

Telekommunikationsendgeräte, wie Telefone, Faxgeräte, Systemtelefone für Telekommunikationsanlagen, Multimedia-Endgeräte und Personalcomputer mit Kommunikationssoftware sind grundsätzlich bekannt und stellen eine Benutzeroberfläche oder Bedienoberfläche dem jeweiligen Benutzer zur Verfügung. Innerhalb der Benutzeroberfläche werden alle Funktionen, die das Gerät ausführen kann, dem Benutzer angeboten. Eine beschränkte, durch den Benutzer individuell am Endgerät festlegbare dauerhafte Auswahl von Funktionen ist nicht möglich. Der Benutzer erhält somit immer den vollen Funktionsumfang des Endgerätes angeboten. Bei den auf dem Markt befindlichen Telekommunikationsendgeräten können bisher lediglich sogenannte Wahlstrings auf Funktionstasten abgelegt werden. Ein individuelles Ausblenden von Funktionen durch den Benutzer aus Menüs ist bisher nicht möglich.

Der Erfindung liegt deshalb die Aufgabe zugrunde, für Telekommunikationsendgeräte ein Verfahren zu schaffen, das die Möglichkeit bietet, daß der Benutzer aus der Gesamtmenge der Funktionen, die das Endgerät dem Benutzer zur Verfügung stellt, mit Hilfe einer einfachen Programmier- oder Auswahlprozedur über Tasten- oder Spracheingabe durch Umschalten vom allgemeinen Betriebszustand in den Programmierzustand oder Auswahlzustand eine Teilmenge selbst auszuwählen und dauerhaft im Gerät abspeichern kann, so daß bei erneuter Benutzung nur noch die Teilmenge an ausgewählten Funktionen zur Benutzung angeboten wird, wobei der Benutzer bzw. Bediener den vollen Funktionsumfang des Gerätes wiederherstellen kann, so daß das jeweilige Endgerät auf ein anderes Benutzerprofil programmiert werden kann.

Die erfindungsgemäße Lösung der Aufgabe ist im Kennzeichen des Patentanspruchs 1 charakterisiert.

Weitere Lösungen bzw. Ausgestaltungen der Erfindung ergeben sich aus den Kennzeichen der Patentansprüche 2 bis 10.

Das erfindungsgemäße Verfahren zum Individualisieren von Telekommunikationsendgeräten bietet dem Benutzer bzw. Bediener den Vorteil, daß nur die Funktionen angeboten werden, die er tatsächlich zu nutzen wünscht. Die Funktionen, die er bis auf weiteres nicht nutzen möchte, muß er nicht bei jeder neuen Benutzung des Gerätes erneut übergehen. Die Selektionszeit verringert sich dadurch und der Funktionsumfang wird auf eine übersichtliche und notwendige Menge reduziert und von Balast befreit. Darüberhinaus kann der Benutzer den vollen Funktionsumfang des Endgerätes herstellen, so daS ihm die Gesamtmenge der Funktionen zu jeder Zeit wieder angeboten werden kann. Aus der Gesamtmenge kann er wiederholt eine andere Teilmenge bilden und das Endgerät kann auch nutzerspezifische Teilmengen speichern und auf Anforderung durch den jeweiligen Benutzer zur Verfügung stellen. Bei gemeinsamer Nutzung eines Telekommunikationsendgerätes durch mehrere Benutzer können auch benutzerbezogene Profile im Telekommunikationsendgerät gespeichert bzw. abgelegt werden. Jeder Benutzer aus der Benutzergruppe eines Telekommunikationsendgerätes findet so sein persönliches Profil vor. Dadurch können Telekommunikationsendgeräte mit hohem Leistungsumfang für verschiedene Zielgruppen produziert werden und die jeweiligen Benutzer können sich ihren regelmäßig genutzten Funktionsumfang selbst zusammenstellen. Das Verfahren erlaubt es außerdem, daß die programmierten Funktionen auf einer zentralen Datenbank gespeichert werden und individuell durch den jeweiligen Benutzer einmal ausgewählt, im Telekommunikationsgerät gespeichert und durch den Benutzer wiederholt verwendet werden können. Bei Änderung des Leistungsumfangs müssen die Telekommunikationsgeräte nicht ausgetauscht werden, sondern können durch erneute Auswahl den jeweiligen Bedürfnissen des Benutzers bzw. der Benutzer angepaßt werden. Weitere Vorteile des erfindungsgemäßen Verfahrens sind in der nachfolgenden Beschreibung aufgeführt.

Das erfindungsgemäße Verfahren wird anhand von Ausführungsbeispielen im folgenden näher beschrieben.

Zunächst wird ein Beispiel für das erfindungsgemäße Verfahren beschrieben, wobei ein Einzelbenutzer mittels einer Programmier- oder Auswahlprozedur, die er zum Beispiel durch Tastendruck einleitet und das Telekommunikationsendgerät vom allgemeinen Betriebszustand in den Programmierzustand oder Auswahlzustand umgeschaltet wird. Der jeweilige Benutzer erhält die Möglichkeit, aus der Gesamtmenge der Funktionen eine gewünschte Teilmenge von Funktionen auszuwählen, die er zukünftig nutzen möchte. Der Benutzer markiert individuell die jeweilige Funktion, zum Beispiel mit einem Tastendruck (durch Drücken zum Beispiel einer Betätigungstaste, einer O.K.-Taste oder einer Quittungstaste). Die so markierten Funktionen werden zum Beispiel innerhalb der Software mit einem Flag oder Kennzeichen versehen, oder es werden entsprechende Merker in einer Tabelle dauerhaft abgelegt. Diese Flags oder Merker dienen der Software als Entscheidungskriterium dafür, ob die jeweilige Funktion aus der Gesamtmenge später als Teilmenge eines individualisierten Menüs dem Benutzer angeboten wird. Die Programmierprozedur kann nach Abschluß der individuellen Auswahl ebenfalls mit einem Tastendruck oder einer speziellen Taste beendet werden. Diese Tastenbetätigung kann auch als Kriterium für eine abschließende Speicherung durch das Telekommunikationsendgerät herangezogen werden. Gleichzeitig überführt diese Tastenbetätigung das Telekommunikationsendgerät wieder in den normalen Betriebsmodus.

Die Auswahl der Funktionen kann auch dahingehend erfolgen, daS der Benutzer aus einer Liste, die den vollen Leistungsumfang enthält, Funktionen auswählt, die er in seinem Profil nicht mehr nutzen will. Das Markieren der betroffenen Funktionen und das Betätigen der Auswahl bzw. das speichern erfolgt zum Beispiel durch eine entsprechende Tastenbetätigung.

Das Ergebnis der Tastenbetätigung von speziellen Funktionstasten kann auch durch Betätigen eines oder verschiedener Softkey(s), denen situationsabhängig jeweils eine Funktion zugeordnet ist, erreicht werden. Die Auswahl und Betätigung der Auswahl kann auch durch die Kombination von Tasteneingabe und Spracheingabe von Schlüsselwörtern für Funktionen und Kommandos erfolgen, sofern das Telekommunikationsendgerät über eine entsprechende Spracheingabe verfügt.

Die individuelle Auswahl von Funktionen bzw. das Definieren eines Benutzerprofils kann beliebig oft wiederholt werden. Neben der Auswahl von Funktionen für ein Benutzerprofil kann der Benutzer auch die Reihenfolge der Funktionen innerhalb des Auswahlmenüs seines Telekommunikationsendgerätes sowie deren Zuordnung zu bestimmten Gruppen bzw. ein Zusammenfassen innerhalb bestimmter Gruppen selbst vornehmen. Der Benutzer kann die Funktionen auch selbst speziell benennen oder umbenennen. Die Zuordnung der Funktionen zu Gruppen bzw. deren Umbenennung und die abschließende Speicherung der Auswahl bzw. Definitionen erfolgt durch entsprechende Tastenbetätigung oder Befehle mittels Spracheingabe.

Wenn mehrere Benutzer ein spezifisches Telekommunikationsendgerät nützen, ist es auch möglich, mehrere Benutzerprofile zu erstellen und im Telekommunikationsendgerät zu speichern, wie es in Verbindung mit dem vorher beschriebenen Verfahren für Einzelbenutzer erklärt worden ist. Die benutzerbezogenen Teilmengen von Funktionen (Benutzerprofile) können durch den jeweiligen Benutzer mittels Tastenbetätigung oder durch Spracheingabe oder durch Tastenbetätigung und Spracheingabe aktiviert werden. Die Aktivierung bzw. die Sperrung bestimmter Funktionen kann auch durch eine Chipkarte erreicht werden, die entsprechend programmiert ist bzw. wird, wenn das Telekommunikationsendgerät über einen entsprechenden Chipkartenleser verfügt. Nach dem Aktivieren seines persönlichen Profils erhält der Benutzer nur noch die Funktionen vom Telekommunikationsendgerät angeboten, die er im zurückliegenden Auswahlprozeß definiert hat. Ein Telekommunikationsendgerät kann so mehrere Benutzerprofile für eine Gruppe von Benutzern eines bestimmten Telekommunikationsendgerätes individuell vorhalten. Im nachfolgenden wird noch das Vorhalten von Funktionen an zentraler Stelle beschrieben. Bei Telekommunikationsendgeräten, die von einer Telekommunikationsanlage oder von einer zentralen Stelle, wie zum Beispiel einem Server/Rechenzentrum in ihrer Funktion gesteuert werden, können die Benutzerprofile auch an einer oder mehreren Stellen, die nicht im Telekommunikationsendgerät liegen, gespeichert und von dort wieder abgerufen werden. Das jeweilige Telekommunikationsendgerät verfügt über die notwendigen Funktionen, über Software und andere Bedienungselemente, um mit dem Server, der zentralen Stelle sowie mit dem Benutzer kommunizieren zu können. Notwendige Informationen, wie EE-Informationen, Art der Anzeigeeinheit einschließlich Zeichensatz, Typ des Telekommunikationsendgerätes, Anzahl und Art der Tasten u.s.w. werden zum Beispiel mit dem Server ausgetauscht.

Verfügt das Telekommunikationsendgerät über eine eigene Steuerung, so können dennoch Profile an einer zentralen Stelle gespeichert werden und bei Bedarf durch das Telekommunikationsendgerät geladen oder abgerufen werden.

Der Benutzer kann bei entsprechender Unterstützung durch das Telekommunikationsendgerät oder durch das Telekommunikationssystem aus einer Gesamtheit von Funktionen, die an zentraler Stelle in einem Kommunikationsnetz im Rahmen einer Dienstleistung durch einen Anbieter vorgehalten werden, seine Teilmenge aus der Gesamtmenge von Funktionen individuell auswählen. Die Funktionsauswahl erfolgt dabei wieder wie bereits vorher im Zusammenhang mit einem Einzelbenutzer beschrieben und wird als Verweis auf die Funktion oder als Software im jeweiligen Telekommunikationsendgerät des Benutzers oder im System des Benutzers gespeichert. Die Dienstleistung kann gegen Kostenerstattung oder gegen Entgelt abgegeben werden. Der Benutzer kann auch hier seine individuelle Teilmenge von Funktionen jederzeit erweitern oder neu festlegen.

In einem Endgerät oder in einem Gesamtsystem können mehrere unabhängige Benutzerprofile auf diese Art und Weise für eine Gruppe von Benutzern eines spezifischen Telekommunikationsendgerätes festgelegt werden. Die Auswahl erfolgt mit vergleichbaren Tastenbetätigungen wie die Definition eines Benutzerprofils für einen Einzelbenutzer.

Das erfindungsgemäße Verfahren kann auch auf alle Endgeräte der Unterhaltungselektronik ausgeweitet und angewendet werden, die über eine Tastatureingabe oder eine Spracheingabe verfügen und entsprechende Funktionen über Software hinterlegt bzw. gespeichert haben.

## Patentansprüche

1. Verfahren zum Individualisieren von Telekommuniktionsendgeräten, Telekommunikationsterminals, Telekommunikationsgeräten oder von Endgeräten der Unterhaltungselektronik auf Benutzer bzw. spezifische Benutzerprofile und/oder Benutzergruppen, dadurch gekennzeichnet,
daß der oder die Benutzer zunächst aus der Gesamtmenge der zur Verfügung stehenden Funktionen eine gewünschte Teilmenge mittels einer Programmier- oder Auswahlprozedur per Tastendruck oder Spracheingabe auswählt bzw. auswählen, nachdem das Umschalten des Endgerätes vom allgemeinen Betriebszustand in den Programmier- oder Auswahlzustand erfolgt ist,
daß die jeweils individuell gewünschten Funktionen mit einem Tastendruck oder einem Sprachsignal innerhalb der Software mit einem Flag gekennzeichnet, oder mit einem entsprechenden Merker in einer Tabelle dauerhaft abgespeichert werden und
daß die Flags bzw. Merker als automatisches Entscheidungskriterium dafür dienen, ob die jeweilige Funktion aus der Gesamtmenge später zur Teilmenge eines individualisierten Menüs dem Benutzer angeboten wird.

2. Verfahren nach Patentanspruch 1, dadurch gekennzeichnet,
daß eine Programmierprozedur nach Abschluß der individuellen Auswahl durch Tastendruck oder ein spezielles Spracheingabesignal beendet wird und
daß der Tastendruck bzw. das Spracheingabesignal gleichzeitig das Signal für eine abschließende Speicherung im Telekommunikationsgerät ist und es wieder zurück in den normalen Betriebsmodus überführt.

3. Verfahren nach einem der Patentansprüche 1 oder 2, dadurch gekennzeichnet,
daß die Auswahl der Funktionen dahingehend erfolgt,
daß der Benutzer bzw. Bediener aus einer Liste, die den vollen Leistungsumfang enthält und im Speicher des Telekommunikationsendgerätes gespeichert ist, durch entsprechende Tastenbetätigung Funktionen auswählt, die er in seinem Profil nicht nutzen will.

4. Verfahren nach einem der Patentansprüche 1 bis 3, dadurch gekennzeichnet,
daß die Auswahl und Bestätigung der Auswahl durch eine Kombination von Tasteneingabe und Spracheingabe von Schlüsselwörtern für Funktionen und Kommandos erfolgen.

5. Verfahren nach einem der Patentansprüche 1 bis 3, dadurch gekennzeichnet,
daß die individuelle Auswahl von Funktionen bzw. das Definieren eines Benutzerprofils aus der im Speicher vorhandenen Liste beliebig wiederholbar ist,
daß neben der Auswahl von Funktionen für ein Benutzerprofil auch die Reihenfolge der Funktionen innerhalb des Auswahlmenüs des Telekommunikationsendgerätes sowie deren Zuordnung zu bestimmten Gruppen bzw. einer Zusammenfassung innerhalb bestimmter Gruppen durch den Benutzer bzw. Bediener bestimmbar sind, und daß die Funktionen umbenennbar sind.

6. Verfahren nach dem Oberbegriff des Patentanspruchs 1, dadurch gekennzeichnet,
daß bei Benutzung eines Telekommunikationsendgerätes durch mehrere Benutzer benutzerbezogene Profile im Speicher des Telekommunikationsendgerätes gespeichert werden, die zum Bedienen und Steuern entsprechender Funktionen des Gerätes aufrufbar sind.

7. Verfahren nach dem Oberbegriff des Patentanspruchs 1, dadurch gekennzeichnet,
daß die Funktionen des Telekommunikationsendgerätes auf einer zentralen Datenbank, zum Beispiel eines Servers, gespeichert und vorgehalten werden,
daß die Funktionen individuell durch den jeweiligen Benutzer einmal ausgewählt, im Telekommunikationsendgerät gespeichert und durch den Benutzer in der ausgewählten Folge automatisch gesteuert wiederholt verwendet werden.

8. Verfahren nach Patentanspruch 7, dadurch gekennzeichnet,
daß die benutzerbezogenen Teilmengen von Funktionen Benutzerprofilen entsprechen und durch den jeweiligen Benutzer bzw. Bediener mittels Tastenbetätigung oder Spracheingabe oder einer Kombination von beiden aktiviert werden,
daß nach dem Aktivieren eines persönlichen Profils für einen Benutzer nur noch diese Funktionen vom Telekommunikationsendgerät nach dem Aktivieren angeboten werden, die im einmaligen zurückliegenden Auswahlprozeß definiert wurden und
daß ein Telekommunikationsendgerät mehrere Benutzerprofile für eine Gruppe von Benutzern eines bestimmten Telekommunikationsendgerätes individuell verfügbar hält.

9. Verfahren nach einem der Patentansprüche 1 bis 8, dadurch gekennzeichnet,
daß in einem Telekommunikationsendgerät oder in einem Telekommunikationssystem mehrere unabhängige Benutzerprofile für eine Gruppe von Benutzern eines spezifischen Telekommunkationsendgerätes festgelegt werden.

10. Verfahren nach einem der Patentansprüche 1 bis 9, dadurch gekennzeichnet,
daß die Funktionsauswahl bzw. Funktionssperrung oder das Benutzerprofil eines Benutzers bzw. Bedieners auf einer Chipkarte gespeichert ist bzw. wird, die vor der Bedienung des Telekommunikationsendgerätes in eine Chipkartenlesestation des Telekommunikationsendgerätes eingebracht wird und nach Initialisierung des Telekommunikationsendgerätes die entsprechenden Funktionen bzw. Funktionsabläufe automatisch aktiviert, sperrt oder steuert.
